# EUROPÄISCHE PATENTSCHRIFT

(11) **EP 0 726 233 B1**
(45) Veröffentlichungstag und Bekanntmachung des Hinweises auf die Patenterteilung: **19.04.2000**
(21) Anmeldenummer: 96101389.3
(22) Anmeldetag: 01.02.1996
(51) Int. Cl.: C04B 33/13, C04B 35/66

(54) **Verfahren zum Recycling von Feuerfestmaterial**
Process for recycling of refractory material
Procédé de recyclage d'un matériau réfractaire

(30) Priorität: 09.02.1995 DE 19504141
(43) Veröffentlichungstag der Anmeldung: 14.08.1996
(73) Patentinhaber: Dr. C. Otto Feuerfest GmbH, 44879 Bochum (DE)
(72) Erfinder: Brunk, Fred, Dr., D-45525 Hattingen (DE)
(74) Vertreter: Köckeritz, Günter

(56) Entgegenhaltungen:
- DATABASE WPI Week 7922 Derwent Publications Ltd., London, GB; AN 79-42026b XP002010226 & SU-A-617 435 (KRASY CONS. MAT. RES.) , 13.Juli 1978
- DATABASE WPI Week 9306 Derwent Publications Ltd., London, GB; AN 93-051419 XP002010227 & SU-A-1 717 584 (BRATSK ALUMINIUM WKS.) , 7.März 1992
- DATABASE WPI Week 9523 Derwent Publications Ltd., London, GB; AN 95-176764 XP002010228 & RU-A-2 020 140 (BRATSK ALUMINIUM WKS. STOCK CO.) , 30.September 1994
- DATABASE WPI Week 7922 Derwent Publications Ltd., London, GB; AN 79-41190b XP002010229 & JP-A-54 048 813 (NIPPON KEIKUNZOKU) , 17.April 1979

## Beschreibung

Die Erfindung betrifft ein Verfahren zum Recycling von stark kontaminiertem Ofenausbruch aus Elektrolysezellen der Aluminiumindustrie, sowie die Verwendung des recycelten Materials als Rohstoff für die Herstellung von feuerfesten Produkten.

Die Gesamtmenge an Elektrolysezellenausbruch (SPL) beträgt ca. 15 - 50kg pro Tonne produziertes Primär-Aluminium. Hierin enthalten sind das Kathodenmaterial (Kohlenstoff und Eisen), sowie die Seitenzustellung und der Oberbau ( insbesondere SiC-Steine, Kohlenstoffmasse). Der eigentliche Unterbau (Isolierung- bestehend aus feuerfesten Schamottesteinen, Feuerleichtsteinen, Calziumsilikat-Platten, Tonerdeprodukten) beträgt ca. 6 - 22 kg pro Tonne produziertem Aluminium. Als toxische - insbesondere wasserlösliche Bestandteile sind zu nennen: Cyanide ca. 0,002 - 0,6 %, Fluor ca. 5 - 20 %.

Aus dem Stand der Technik sind verschiedene Methoden zur Behandlung von Gesamt - SPL bekannt. Diese Verfahren lassen sich unterteilen in Auslaugeverfahren und thermische Prozesse. Alle diese Verfahren zielen entweder auf eine Seperation der chemischen (ungefährlichen, partiell wieder einsetzbaren, z.B. Kryolith) Bestandteile hin, oder SPL wird deart aufwendig behandelt, um das Endprodukt als Landfüllmaterial einsetzen zu können. Generell wird beim Ofenausbruch das gebrauchte Feuerfestmaterial unterhalb der Kathode vom restlichen SPL - Material getrennt entsorgt (unterschiedlich stark kontaminierte Stoffe).

Aus dem SU 617 435 ist eine Masse zur Herstellung von porösen nicht feuerfesten Ziegeln bekannt, die als Magerungsmittel fluorhaltige Abfälle der Aluminiumproduktion mit einem Anteil von 12 - 22 Mass.-% enthält. Als fluorhaltige Abfälle der Aluminiumproduktion kann danach auch die verbrauchte Auskleidung von Elektrolyseöfen verwendet werden.

Angaben zur Behandlung bzw. Aufbereitung dieses Materials sind dieser Lehre jedoch nicht zu entnehmen. Bei den nach diesem Verfahren hergestellten Steinen handelt es sich nicht um dichte, feuerfeste Steine, sondern um Ziegel mit einer Wasseraufnahme ≥ 12%. Diese Ziegel enthalten außerdem zusätzliche Ausbrennstoffe, während bei dem Verfahren nach der vorliegenden Erfindung der im SPL-Material enthaltene Kohlenstoff oxidiert werden soll.

Aus der SU 1717584 ist ein Rohgemisch zur Herstellung von Tonziegeln für die Kathodenauskleidung eines Aluminiumelektrolyseofens bekannt. Anstelle der fluorhaltigen Abfälle aus der Aluminiumproduktion soll hier jedoch das Pulver des Ausschlages aus der obersten Schicht des Kathodensockels eines Aluminiumelektrolyseofens eingesetzt werden. Bei den nach diesem Verfahren hergestellten Tonziegeln handelt es sich ebenfalls nicht einen feuerfesten Werkstoff, da die Temperatur des Erweichungsbeginns verringert werden soll. Außerdem werden auch hier Ausbrennstoffe zu gegeben.

Die Aufgabe der Erfindung besteht darin ein Verfahren vorzustellen, nach welchem kontaminiertes ehemaliges Feuerfestmaterial aus Aluminiumelektrolysezellen, einer wirtschaftlichen Weiterverwertung zugeführt werden kann.

Mit dem erfindungsgemäßen Verfahren wird die Umwandlung des kontaminierten Materials in einen für die Herstellung dichter feuerfester Schamottesteine und Ziegelsteine einsetzbaren Rohstoff möglich.
Damit verbunden ist eine Kryolithbeständigkeit bei den feuerfesten Schamottesteinen und eine Herabsetzung der Steinbrandtemperaturen für feuerfeste Schamottesteine und Ziegelsteine.

Erfindungsgemäß wird die Aufgabe dadurch gelöst, daß das kontaminierte Unterbau- und Isolierungsmaterial aus Aluminiumelektrolysezellen auf eine Korngröße < 10mm vorzerkleinert wird, und anschließend bei einer Temperatur von 350 - bis 850°C, vorzugsweise bei 650°C kalziniert wird. In diesem Temperaturbereich erfolgt die Zerstörung der in diesem Material enthaltenen giftigen Cyanide, sowie die Teiloxidation vom Restkohlenstoff. Aufgrund der niedrigen Temperatur erfolgt ein Minimum an Fluoremission. Nach der Kalzinierung wird das Material feingemahlen.

Hierdurch wird eine Homogenisierung des kalzinierten Materials erreicht. Das so aufbereitete Material wird nun als Rohstoff mit einem Anteil von 0,1 - 12 Gew.-% am Gesamtversatz bei der Herstellung von feuerfesten Produkten, insbesondere von feuerfesten Schamottesteinen für die Auskleidung von Elektrolysezellen eingesetzt. Das erfindungsgemäße Verfahren zeigt somit einen geschlossenen Kreislauf beim Recyceln von Elektrolysezellenausbruch auf.

Nach einem anderen Merkmal der Erfindung kann das recycelte Material auch als Rohstoff bei der Ziegelherstellung eingesetzt werden, wodurch die Brenntemperatur gegebenenfalls reduziert werden kann.

Die Erfindung beinhaltet außerdem einen feuerfesten Stein, insbesondere einen Schamottestein, wobei der Versatz neben dem für diese Steine üblichen Bindemittel Ton und Schamotte 0,1 - 12 Gew.-% eines Magerungsmittels enthält, welches aus bei einer Temperatur von 350 - 850°C kalzinierten und auf eine Korngröße < 0,5 mm aufgemahlenen Ausbruchmaterial aus Aluminiumelektrolysezellen besteht.

Das kalzinierte und gemahlene Feuerfestausbruchmaterial aus Aluminiumelktrolysezellen hat nach einem bevorzugten Merkmal der Erfindung eine Zusammensetzung von:

| | Gew.-% |
|---|---|
| SiO₂ | 20 - 60 |
| Al₂O₃ | 20 - 40 |
| TiO₂ | 0,2 - 1 |
| Fe₂O₃ | 1,5 - 6 |
| CaO | 0,1 - 6 |
| MgO | 0,2 - 0,8 |
| Na₂O | 2,0 - 15 |
| C | 0 - 2,0 |
| F⁻ | 3 - 15 |
| CN⁻ | 0,1 - 5ppm |

Nachfolgend soll die Erfindung anhand eines Ausführungsbeispieles näher erläutert werden. Das verwendete kalzinierte und gemahlene Ausbruchmaterial aus einer Aluminiumelektrolysezelle (SPL) hatte die folgende mittlere chemische Zusammensetzung

| (Angaben in Gew.-%): | | | | | | | | | |
|---|---|---|---|---|---|---|---|---|---|
| SiO₂ | Al₂O₃ | TiO₂ | Fe₂O₃ | CaO | MgO | Na₂O | K₂O | Fluor | CN⁻ |
| 49,1 | 28,9 | 0,48 | 2,90 | 4,16 | 0,40 | 7,50 | 1,14 | 5,2 | 2 ppm |

### Beispiele:

| | **Nr.1** | **Nr.2** | **Nr.3** |
|---|---|---|---|
| Schamotte 1 ≥3 mm | 4 | 5 | 4 |
| Schamotte 1-3 mm | 28 | 27 | 27 |
| Schamotte 0,2-1 mm | 20 | 19 | 18 |
| Schamotte 0-0,2 mm | 18 | 14 | 11 |
| SPL | | | |
| kalziniert 0-0,5 mm | - | 5 | 10 |
| Ton | 30 | 30 | 30 |

Das Mischen der Rohstoffe erfolgte unter einer Wasserzugabe von ca. 5,5 Gew.-% in einem Intensivmischer. Das kalzinierte und gemahlene SPL-Material wurde als letzte feste Rohstoffkomponente dem Mischprozeß beigegeben. Die Gesamtmischzeit betrug ca. 15 Minuten.
Die Mischungen wurden bei einem Pressdruck von ca. 40 bis 50 MPa auf einer hydraulischen Stempelpresse zu Steinen verformt. Die erzielten Grünrohdichten der Formlinge betrugen 2,20 g/cm³. Die getrockneten Steine (24 Stunden bei 110 °C) wurden bei unterschiedlichen Temperaturen 4 Stunden gebrannt (s. Tabelle), die Aufheiz- und Abkühlgeschwindigkeiten betrugen einheitlich ca. 100°C/h.

Die ermittelten Eigenschaftswerte der Werkstoffmuster lauten:

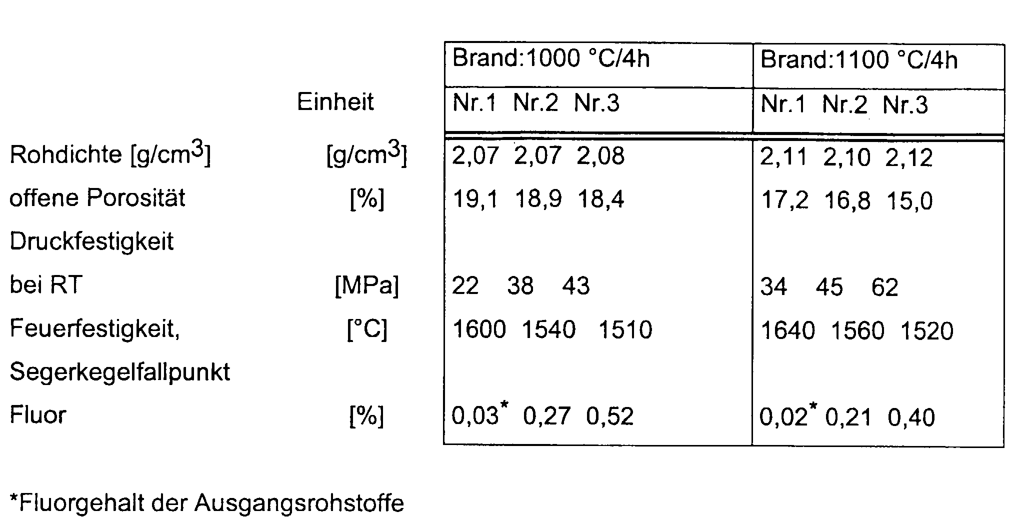

An Werkstoffmustern der Brennserie 1000 °C/4h wurde die Kryolithbeständigkeit untersucht. Hierzu wurden Tiegel der Abmessung (ca.) 114 x 114 x 64 mm mit einer zentralen Bohrung (ca. 59 mm Durchmesser und ca. 40 mm Bohrtiefe) hergestellt. Es wurde im Tiegeltest eine Pulvermischung, bestehend aus 60 Gew.-% Kryolith und 40 Gew.-% NaF, verwendet. In die Bohrung der getrockneten Probekörper wurden 160 g dieser Pulvermischung gefüllt, welche anschließend mit einem Deckel des zu prüfenden Werkstoffmaterials gekapselt wurde.
Die Prüftemperatur war 950 °C, die Aufheizrate 4 °C/min, die Haltezeit betrug 24 h. Nach Versuchsende wurden die Tiegel diagonal geschnitten und als Maß für die Kryolithbeständigkeit die zerstörte Fläche bewertet (visuell).

Überraschenderweise zeigen die mit SPL-Material hergestellten Werkstoffmuster im Vergleich zur Probe ohne SPL-Zusatz keine Verschlechterung der Kryolithbeständigkeit, das Ausmaß an zerstörter Fläche ist tendenziell geringer.

## Patentansprüche

1. Verfahren zum Recycling von stark kontaminiertem Ofenausbruch aus Elektrolysezellen der Aluminiumindustrie, dadurch gekennzeichnet, daß
a) das Material auf eine Korngröße < 10mm vorzerkleinert wird,
b) das so vorbehandelte Material bei einer Temperatur von ca.350 bis 850 °C kalziniert wird,
c) das kalzinierte Material anschließend feingemahlen wird,
d) das so aufbereitete Material als Rohstoff mit einem Anteil von 0,1 - 12 Gew.-% am Gesamtversatz bei derHerstellung von feuerfesten Produkten, insbesondere von dichten feuerfesten Schamottesteinen eingesetzt wird.

2. Verfahren nach Anspruch 1, dadurch gekennzeichnet, daß bei einer Temperatur von ca. 650 °C kalziniert wird.

3. Verfahren nach den Ansprüchen 1 und 2, dadurch gekennzeichnet, daß das so aufbereitete Material als Rohstoff bei der Ziegelherstellung eingesetzt wird.

4. Feuerfester Stein, insbesondere Schamottestein,
dadurch gekennzeichnet, daß
der Versatz neben dem für feuerfeste Steine üblichen Bindemittel Ton und Schamotte 5 - 10 Gew.-% eines Rohstoffes enthält, welcher aus bei einer Temperatur von 350 - 850 °C kalziniertem und auf eine Korngröße von < 0,5 mm aufgemahlenem Ausbruchmaterial aus Aluminiumelektrolysezellen besteht.

5. Feuerfester Stein nach Anspruch 4 dadurch gekennzeichnet, daß das kalzinierte und gemahlene Feuerfestausbruchmaterial aus Aluminiumelektrolysezellen eine mittlere chemische Zusammensetzung von
| | Gew.-% |
|---|---|
| SiO₂ | 20 - 60 |
| Al₂O₃ | 20 - 40 |
| TiO₂ | 0,2 - 1 |
| Fe₂O₃ | 1,5 - 6 |
| CaO | 0,1 - 6 |
| MgO | 0,2 - 0,8 |
| Na₂O | 2,0 - 15 |
| C | 0 - 2,0 |
| F⁻ | 3 - 15 |
| CN⁻ | 0,1 - 5ppm |
aufweist.

6. Rohstoffmaterial für die Herstellung feuerfester keramischer Produkte, wie Schamottesteine, Schamottegranulate oder dgl. für die Verwendung in Aluminiumelektrolysezellen als Beimengung in im übrigen üblichen Rohstoffgemengen, dadurch gekennzeichnet, daß es aus bei 350° bis 850 °C kalziniertem bzw. getempertem, gegebenenfalls kontaminiertem, Ofenausbruchmaterial aus Aluminiumelektrolysezellen besteht.

7. Material nach Anspruch 6, dadurch gekennzeichnet,
daß es eine Korngröße unter 0,5 mm aufweist.

8. Material nach Anspruch 6 oder 7, dadurch gekennzeichnet,
daß es die folgende Zusammensetzung aufweist:
| | Gew.-% |
|---|---|
| SiO₂ | 20 - 60 |
| Al₂O₃ | 20 - 40 |
| TiO₂ | 0,2 - 1 |
| Fe₂O₃ | 1,5 - 6 |
| CaO | 0,1 - 6 |
| MgO | 0,2 - 0,8 |
| Na₂O | 2,0 - 15 |
| C | 0 - 2,0 |
| F⁻ | 3 - 15 |
| CN⁻ | 0,1 - 5ppm |

9. Verfahren zur Herstellung eines Rohstoffmaterials gemäß einem oder mehreren der Ansprüche 6 bis 8, dadurch gekennzeichnet, dass Ofenausbruchmaterial aus Aluminiumelektrolysezellen, insbesondere aus dem Unterbau von und/oder Isoliermaterial
a) bei Temperaturen von 350 bis 850 °C bis zur Zerstörung von Kontaminationsstoffen, insbesondere bis zur Zerstörung von Cyaniden, und bis zur vorzugsweise mindestens Teiloxidation von Restkohlenstoff kalziniert bzw. getempert wird,
b) das nach a) behandelte Material abgekühlt und auf eine Korngröße < 0,5 mm aufgemahlen wird.

10. Verfahren nach Anspruch 9, dadurch gekennzeichnet,
dass das Ausbruchmaterial vor der Temperaturbehandlung auf eine Korngröße < 10 mm vorzerkleinert wird.

## Claims

1. Method of recycling intensely contaminated furnace waste from electrolytic cells of the aluminium industry, characterised in that
a) the material is precomminuted to a particle size of < 10 mm,
b) the material, which has thus been pretreated, is calcined at a temperature of approx. 350 to 850° C,
c) the calcined material is subsequently finely ground, and
d) the material, thus prepared, is used as the raw substance having a proportion of 0.1 - 12 % by wt. in the total mixture for the production of refractory products, more especially dense, refractory fireclay bricks.

2. Method according to claim 1, characterised in that calcination is effected at a temperature of approx. 650° C.

3. Method according to claims 1 and 2, characterised in that the material, thus prepared, is used as the raw substance for producing tiles.

4. Refractory brick, more especially a chamotte brick, characterised in that, in addition to the binding agent - clay and fireclay - which is conventional for refractory bricks, the mixture contains 5 - 10 % by wt. of a raw material which comprises waste material formed from aluminium electrolytic cells, said material having been calcined at a temperature of 350 - 850° C and ground to a particle size of < 0.5 mm.

5. Refractory brick according to claim 4, characterised in that the calcined and ground refractory waste material from aluminium elecrolytic cells has a mean chemical composition of
| | % by wt. |
|---|---|
| SiO₂ | 20 - 60 |
| Al₂O₃ | 20 - 40 |
| TiO₂ | 0.2 - 1 |
| Fe₂O₃ | 1.5 - 6 |
| CaO | 0.1-6 |
| MgO | 0.2 - 0.8 |
| Na₂O | 2.0 - 15 |
| C | 0 - 2.0 |
| F⁻ | 3 - 15 |
| CN⁻ | 0,1 - 5ppm |

6. Raw substance material for producing refractory ceramic products, such as chamotte bricks, chamotte granules or the like, for use in aluminium electrolytic cells as the addition in otherwise conventional raw substance batches, characterised in that it comprises furnace waste material from aluminium electrolytic cells, such material having been calcined or tempered at 350° to 850° C, and possibly contaminated.

7. Material according to claim 6, characterised in that it has a particle size of less than 0.5 mm.

8. Material according to claim 6 or 7, characterised in that it has the following composition:
| | % by wt. |
|---|---|
| SiO₂ | 20 - 60 |
| Al₂O₃ | 20 - 40 |
| TiO₂ | 0.2 - 1 |
| Fe₂O₃ | 1.5 - 6 |
| CaO | 0.1 - 6 |
| MgO | 0.2 - 0.8 |
| Na₂O | 2.0 - 15 |
| C | 0 - 2.0 |
| F⁻ | 3 - 15 |
| CN⁻ | 0.1 - 5ppm |

9. Method of producing a raw substance material according to one or more of claims 6 to 8, characterised in that the furnace waste material from aluminium electrolytic cells, more especially from the substructure of and/or insulating material,
a) is calcined or tempered at temperatures of 350 to 850° C until the destruction of contamination substances, more especially until the destruction of cyanides, and until the, preferably at least partial, oxidation of residual carbon,
b) the material, treated according to a), is cooled and ground to a particle size of < 0.5 mm.

10. Method according to claim 9, characterised in that the waste material is precomminuted to a particle size of < 10 mm prior to the temperature treatment.

## Revendications

1. Procédé de recyclage d'un résidu de four fortement contaminé provenant de cellules d'électrolyse de l'industrie de l'aluminium, caractérisé en ce que
a) on broie préalablement le matériau jusqu'à une grosseur de grains < 10 mm,
b) on calcine le matériau ainsi préalablement traité à une température d'environ 350 à 850°C,
c) ensuite, on broie finement le matériau calciné,
d) on utilise le matériau ainsi apprêté en tant que matière première dans une proportion de 0,1 - 12 % en poids du mélange total pour la fabrication de produits réfractaires, en particulier de briques de chamotte denses réfractaires.

2. Procédé selon la revendication 1, caractérisé en ce qu'on calcine à une température d'environ 650°C.

3. Procédé selon les revendications 1 et 2, caractérisé en ce qu'on utilise le matériau ainsi apprêté en tant que matière première pour la fabrication de tuiles.

4. Brique réfractaire, en particulier brique de chamotte,
caractérisée en ce que
le mélange contient, en plus du liant usuel argile et chamotte pour briques réfractaires, de 5 à 10 % en poids d'une matière première qui est formée d'un matériau résiduel provenant de cellules d'électrolyse d'aluminium, calciné à une température de 350-850°C et broyé jusqu'à une grosseur de grains < 0,5 mm.

5. Brique réfractaire selon la revendication 4, caractérisée en ce que le matériau résiduel calciné et broyé provenant de cellules d'électrolyse d'aluminium présente une composition chimique moyenne de
| | % en poids |
|---|---|
| SiO₂ | 20 - 60 |
| Al₂O₃ | 20 - 40 |
| TiO₂ | 0,2 - 1 |
| Fe₂O₃ | 1,5 - 6 |
| CaO | 0,1 - 6 |
| MgO | 0,2 - 0,8 |
| Na₂O | 2,0 - 15 |
| C | 0 - 2,0 |
| F⁻ | 3 - 15 |
| CN⁻ | 0,1 - 5 ppm. |

6. Matière première pour la fabrication de produits céramiques réfractaires, comme des briques de chamotte, des granules de chamotte ou analogues pour l'utilisation dans des cellules d'électrolyse d'aluminium en tant qu'additif dans des masses par ailleurs usuelles de matières premières, caractérisée en ce qu'elle est formée d'un matériau résiduel de four calciné ou recuit à 350° à 850°C, éventuellement contaminé, provenant de cellules d'électrolyse d'aluminium.

7. Matériau selon la revendication 6, caractérisé en ce qu'il présente une grosseur de grains inférieure à 0,5 mm.

8. Matériau selon la revendication 6 ou 7, caractérisé en ce qu'il présente la composition suivante :
| | % en poids |
|---|---|
| SiO₂ | 20 - 60 |
| Al₂O₃ | 20 - 40 |
| TiO₂ | 0,2 - 1 |
| Fe₂O₃ | 1,5 - 6 |
| CaO | 0,1 - 6 |
| MgO | 0,2 - 0,8 |
| Na₂O | 2,0 - 15 |
| C | 0 - 2,0 |
| F⁻ | 3 - 15 |
| CN⁻ | 0,1 - 5 ppm. |

9. Procédé de fabrication d'une matière première selon l'une ou plusieurs des revendications 6 à 8, caractérisé en ce qu'un matériau résiduel de four provenant de cellules d'électrolyse d'aluminium, en particulier provenant de l'infrastructure de et/ou de matériau isolant,
a) est calciné ou recuit à des températures de 350 à 850°C jusqu'à la destruction de substances contaminantes, en particulier jusqu'à la destruction de cyanures, et de préférence jusqu'à l'oxydation au moins partielle de carbone résiduel,
b) le matériau traité conformément à a) est refroidi et broyé jusqu'à une grosseur de grains < 0,5 mm.

10. Procédé selon la revendication 9, caractérisé en ce que le matériau résiduel est préalablement broyé jusqu'à une grosseur de grains < 10 mm avant le traitement thermique.
